# EUROPÄISCHE PATENTSCHRIFT

(11) **EP 3 185 400 B1**
(45) Veröffentlichungstag und Bekanntmachung des Hinweises auf die Patenterteilung: **16.03.2022**
(21) Anmeldenummer: 15201601.0
(22) Anmeldetag: 21.12.2015
(51) Int. Cl.: H02K 1/24

(54) **ROTOR FÜR EINEN SYNCHRON-RELUKTANZMOTOR**
ROTOR FOR A SYNCHRONOUS RELUCTANCE MOTOR
ROTOR POUR UN MOTEUR A RELUCTANCE SYNCHRONE

(43) Veröffentlichungstag der Anmeldung: 28.06.2017
(73) Patentinhaber: JULI Motorenwerk, s.r.o., 66448 Moravany (CZ)
(72) Erfinder: ZBORIL, Pavel, CZ-62500 Brno - Bohunice (CZ); HÖLL, Jan, CZ-63500 Brno (CZ)
(74) Vertreter: Hauck Patentanwaltspartnerschaft mbB

(56) Entgegenhaltungen:
- WO-A1-2010/102671
- DE-T2- 69 816 675
- US-A1- 2004 150 282

## Beschreibung

Die Erfindung betrifft einen Rotor für einen Synchron-Reluktanzmotor. Bei dieser Bauform eines Elektromotors wird ein Drehmoment auf den Rotor durch die sogenannte Reluktanzkraft erzeugt, die eine Vorzugsrichtung des Rotors, in der dieser einen besonders geringen magnetischen Widerstand aufweist, in Richtung eines von einem Stator des Synchron-Reluktanzmotors erzeugten, magnetischen Felds auszurichten sucht.

Bekannte Rotoren für Synchron-Reluktanzmotoren werden aus einem weichmagnetischen Material, insbesondere aus einer Vielzahl von zu einem Paket zusammengestellten Elektroblechen hergestellt. Um die Vorzugsrichtungen mit geringem magnetischen Widerstand auszubilden, weist der Rotor eine Vielzahl von Flussbarrieren auf, die den magnetischen Widerstand in von den Vorzugsrichtungen verschiedenen Richtungen erhöhen. Hierzu werden die Elektrobleche zumeist in geeigneter Weise ausgestanzt, sodass Hohlräume entstehen, die von dem weichmagnetischen Material umgeben sind.

Form und Anzahl der Flussbarrieren sind für die Eigenschaften des Synchron-Reluktanzmotors wichtig. Angestrebt wird ein möglichst geringer magnetischer Widerstand entlang der magnetischen Vorzugsrichtungen, die auch als d-Achsen bezeichnet werden, und zugleich ein möglichst hoher magnetischer Widerstand entlang der dazu versetzt angeordneten q-Achsen. Gleichzeitig muss der Rotor eine hohe mechanische Stabilität aufweisen, um den auftretenden Belastungen auch bei hohen Drehzahlen auf Dauer standhalten zu können.

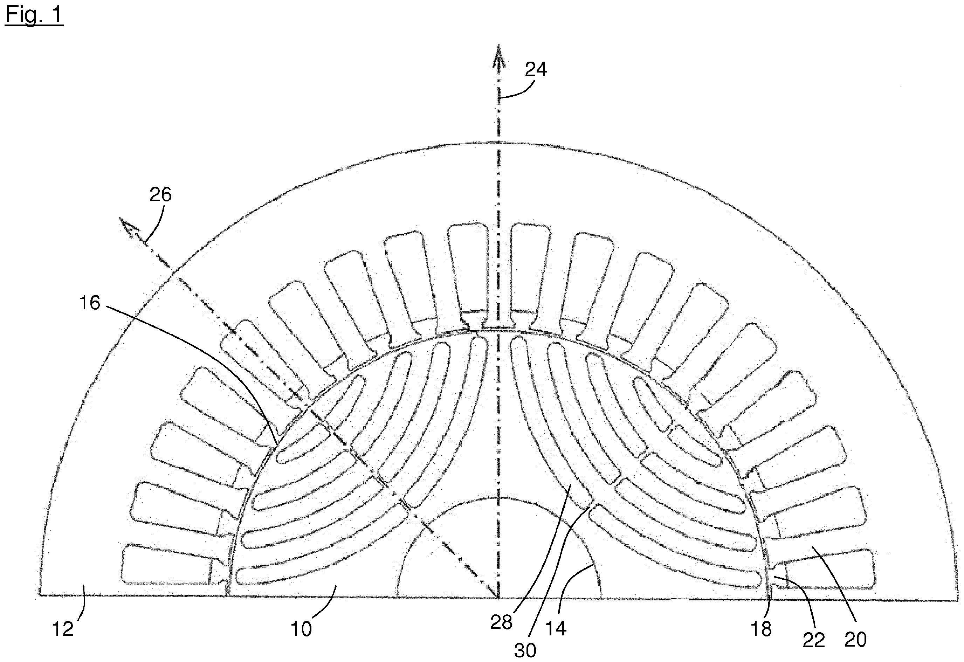

Einzelheiten eines anderen, herkömmlichen Synchron-Reluktanzmotors werden anhand der Figur 1 näher erläutert. Die Figur 1 zeigt einen Ausschnitt einer Querschnittsdarstellung eines Synchron-Reluktanzmotors mit einem Rotor 10 und einem Stator 12. Der Rotor 10 weist eine mittige Aussparung 14 zur Aufnahme einer Rotorwelle und einen kreisförmigen Außenumfang 16 auf. Der Stator 12 umgibt den Rotor 10 außen, wobei zwischen dem Außenumfang 16 des Rotors 10 und dem Stator 12 ein Luftspalt 18 ausgebildet ist. Der Rotor 12 weist eine Vielzahl von Statorzähnen 20 und dazwischen angeordneten Statorschlitzen 22 auf.

Der Rotor 10 hat vier Pole, die jeweils einer d-Achse 24 mit geringem magnetischem Widerstand entsprechen. Der Rotor 10 weist außerdem vier Kreissektoren auf, die sich jeweils zwischen zwei benachbarten d-Achsen 24 über einen Winkelbereich von 90° erstrecken. Zwei davon sind in dem Ausschnitt der Figur 1 dargestellt. Jeder dieser Kreissektoren weist eine q-Achse 26 und vier Flussbarrieren 28 auf. Jede der Flussbarrieren 28 ist in der Mitte von einer radialen Rippe 30 unterteilt und an ihren beiden Enden durch einen tangential angeordneten Steg 32 von dem Außenumfang 18 getrennt.

Die Druckschrift US 2004/0150282 A1 beschreibt einen Rotor mit vier Flussbarrieren je Kreissektor, bei dem in den innersten Flussbarrieren jeweils ein Permanentmagnet angeordnet ist.

Die Druckschrift DE 698 16 675 T2 offenbart einen Rotor für einen Reluktanzmotor, bei dem jeder Kreissektor mehrere Flussbarrieren aufweist. In einigen Ausführungsbeispielen weisen die Stege, durch die die einzelnen Flussbarrieren von einem Außenumfang des Rotors getrennt sind, von innen nach außen abnehmende Breiten auf.

Aus der Druckschrift WO 2010/102671 A1 ist ein Rotor für einen Synchron-Reluktanzmotor mit den Merkmalen des Oberbegriffs des Anspruchs 1 bekannt geworden.

Davon ausgehend ist es die Aufgabe der Erfindung, einen Rotor für einen Synchron-Reluktanzmotor zur Verfügung zu stellen, der verbesserte magnetische Eigenschaften, eine hohe mechanische Stabilität und eine lange Lebensdauer aufweist.

Diese Aufgabe wird gelöst durch den Rotor mit den Merkmalen des Anspruchs 1. Vorteilhafte Ausgestaltungen sind in den Unteransprüchen angegeben.

Der Rotor ist für einen Synchron-Reluktanzmotor bestimmt und hat einen Querschnitt, der einen Außenumfang, vier Pole und vier Kreissektoren umfasst, wobei
- jeder Kreissektor eine q-Achse und vier Flussbarrieren aufweist,
- jede Flussbarriere symmetrisch zu der q-Achse angeordnet ist,
- jede Flussbarriere zwei Enden aufweist, die jeweils von einem tangential angeordneten Steg von dem Außenumfang getrennt sind,
- jede Flussbarriere eine innere Grenzlinie aufweist, die an ihren beiden Enden jeweils mit einer ersten Krümmung in einen angrenzenden Steg übergeht,
- jede Flussbarriere eine äußere Grenzlinie aufweist, die an ihren beiden Enden jeweils mit einer zweiten Krümmung in einen angrenzenden Steg übergeht,
- die erste Krümmung der zweitinnersten Flussbarriere einen minimalen Radius R2a und die zweite Krümmung der zweitinnersten Flussbarriere einen minimalen Radius R2b aufweist,
- die Stege der zweitinnersten Flussbarriere eine minimale Breite d2 aufweisen, und
- die minimale Breite d1 der Stege der innersten Flussbarriere und die minimale Breite d3 der Stege der zweitäußersten Flussbarriere größer sind als die minimale Breite d2.

Sämtliche jetzt und im Folgenden genannten Linien, Krümmungen und Radien befinden sich in dem betrachteten Querschnitt des Rotors. Der Querschnitt verläuft orthogonal zu einer Rotationsachse des Rotors. Die Kreissektoren können sich jeweils über einen Winkelbereich von 90° erstrecken. Der Rotor kann genau vier Flussbarrieren aufweisen.

Die innere Grenzlinie und die äußere Grenzlinie gehen jeweils in einen Steg der betreffenden Flussbarriere, genauer in dessen innere Begrenzungslinie, die den Steg von dem Ende der Flussbarriere trennt, über. An den Übergängen ist jeweils eine bestimmte Krümmung ausgebildet. Diese ersten und zweiten Krümmungen können über ihren Verlauf variierende Krümmungsradien aufweisen, die an einem bestimmten Punkt ein Minimum erreichen. Ebenfalls möglich ist ein kreisbogenförmiger Übergang zwischen innerer bzw. äußerer Grenzlinie und Steg. In diesem Fall weist die betreffende Krümmung einen gleichmäßigen Krümmungsradius auf, der dem minimalen Krümmungsradius entspricht.

Wie üblich sind die Flussbarrieren jeweils bis nahe an den Außenumfang des Rotors herangeführt, wo sie an einen im Wesentlichen tangential verlaufenden Steg angrenzen, der die Flussbarriere von dem Außenumfang trennt. Der Außenumfang kann kreisförmig ausgebildet sein. Jeder der Stege weist an seiner schmalsten Stelle eine minimale Breite auf.

Die q-Achse kann eine Rotationsachse des Rotors, die sich im Mittelpunkt des betrachteten Querschnitts/des Außenumfangs befindet, schneiden. Die Unterscheidung zwischen den Flussbarrieren in innerste, zweitinnerste, zweitäußerste und äußerste Flussbarriere richtet sich nach deren Anordnung in radialer Richtung. Die innerste Flussbarriere befindet sich somit am dichtesten an der Rotationsachse, die äußerste Flussbarriere im größten Abstand davon.

Bei der Erfindung weisen die Stege der zweitinnersten Flussbarriere eine relativ geringe Breite auf, was einen großen magnetischen Widerstand entlang der q-Achse begünstigt. Die benachbarten Stege der innersten Flussbarriere und der zweitäußersten Flussbarriere weisen eine größere minimale Breite auf. Auf diese Weise wird ein besonders günstiger Kompromiss zwischen magnetischen Eigenschaften und mechanischer Stabilität erhalten. Dies ist überraschend, da die Stege einer weiter innen angeordneten Flussbarriere eine tragende Funktion für einen größeren Teil des Rotors erfüllen, als die Stege einer weiter außen angeordneten Flussbarriere.

In dem betrachteten Querschnitt wird jeder Steg auf der einen Seite von dem Außenumfang des Rotors begrenzt, auf der anderen Seite grenzt er an ein Ende einer Flussbarriere an. Die diese Grenze bildende Linie kann, bei gleichmäßiger Breite des Stegs, in einem gleichmäßigen Abstand von dem Außenumfang verlaufen. Sie kann jedoch auch geradlinig ausgebildet sein oder eine andere Krümmung aufweisen als der Außenumfang.

Jede Flussbarriere kann in dem betrachteten Querschnitt eine Mittellinie aufweisen, die sich von einem Ende der Flussbarriere zum anderen Ende der Flussbarriere erstreckt. Die Mittellinie kann eine Krümmung mit einem gleichmäßigen Krümmungsradius aufweisen, aber auch elliptisch, auf andere Weise gekrümmt oder abschnittsweise geradlinig ausgebildet sein. Die äußere Grenzlinie und/oder die innere Grenzlinie können in einem gleichmäßigen Abstand von der Mittellinie der jeweiligen Flussbarriere verlaufen. In diesem Fall weist die betreffende Flussbarriere über ihre gesamte Länge eine im Wesentlichen gleichmäßige Breite auf. Die Breite kann jedoch auch variieren und die innere Grenzlinie und/oder die äußere Grenzlinie können eine andere Krümmung aufweisen als die Mittellinie.

In einer Ausgestaltung beträgt die minimale Breite d1 der innersten Flussbarriere das 1,1-fache bis 1,3-fache der minimalen Breite d2. Insbesondere kann sie etwa das 1,2-fache der minimalen Breite d2 betragen.

In einer Ausgestaltung beträgt die minimale Breite d3 der zweitäußersten Flussbarriere das 1,1-fache bis 1,3-fache der minimalen Breite d2. Insbesondere kann sie etwa das 1,2-fache der minimalen Breite d2 betragen.

In einer Ausgestaltung beträgt die minimale Breite d4 der äußersten Flussbarriere das 0,85-fache bis 1,15-fache der minimalen Breite d2. Insbesondere kann sie etwa die gleiche Breite aufweisen wie die minimale Breite d2.

Die minimale Breite d2 kann zum Beispiel im Bereich von 0,6 mm bis 1,5 mm liegen. Insbesondere kann die minimale Breite d2 im Bereich von 0,7 mm bis 1,2 mm liegen. Diese minimalen Breiten können beispielsweise für einen Rotor mit einem Durchmesser im Bereich von 70 mm bis 90 mm verwendet werden. Bei größerem Rotordurchmesser im Bereich von zum Beispiel 110 mm bis 140 mm kann zum Beispiel eine minimale Breite d2 im Bereich von 1,5 mm bis 2,0 mm gewählt werden.

Die genannten Ausgestaltungen tragen zu einem optimalen Kompromiss zwischen den magnetischen und mechanischen Eigenschaften des Rotors bei.

In einer Ausgestaltung beträgt der minimale Radius R1a der ersten Krümmung der innersten Flussbarriere das 3,0-fache bis 4,0-fache des minimalen Radius R2a. Insbesondere kann er etwa das 3,5-fache des minimalen Radius R2a betragen.

In einer Ausgestaltung beträgt der minimale Radius R1b der zweiten Krümmung der innersten Flussbarriere das 0,5-fache bis 1,0-fache des minimalen Radius R2b. Insbesondere kann er etwa das 0,75-fache des minimalen Radius R2b betragen.

In einer Ausgestaltung beträgt der minimale Radius R3a der ersten Krümmung der zweitäußersten Flussbarriere das 0,8-fache bis 1,2-fache des minimalen Radius R2a. Insbesondere kann er etwa genauso groß sein wie der minimale Radius R2a.

In einer Ausgestaltung beträgt der minimale Radius R3b der zweiten Krümmung der zweitäußersten Flussbarriere das 4,0-fache bis 5,0-fache des minimalen Radius R2b. Insbesondere kann er etwa das 4,5-fache des minimalen Radius R2b betragen.

In einer Ausgestaltung beträgt der minimale Radius R4a der ersten Krümmung der äußersten Flussbarriere das 0,8-fache bis 1,2-fache des minimalen Radius R2a. Insbesondere kann er etwa genauso groß sein wie der minimale Radius R2a.

In einer Ausgestaltung beträgt der minimale Radius R4b der zweiten Krümmung der äußersten Flussbarriere das 3,0-fache bis 5,0-fache des minimalen Radius R2a. Insbesondere kann er etwa das 4-fache des minimalen Radius R2a betragen.

Der minimale Radius R2a und/oder der minimale Radius R2b können zum Beispiel im Bereich von 0,4 mm bis 1,0 mm liegen. Insbesondere können der minimale Radius R2a und/oder der minimale Radius R2b im Bereich von 0,6 mm bis 0,8 mm liegen.

Die genannten Ausgestaltungen der minimalen Radien bewirken ebenfalls einen besonders vorteilhaften Kompromiss zwischen optimalen magnetischen und mechanischen Eigenschaften des Rotors.

In einer Ausgestaltung ist in keiner der Flussbarrieren eine radial angeordnete Rippe vorhanden. Grundsätzlich kann die Erfindung auch in Verbindung mit einer oder mehreren zusätzlich zu den Stegen vorhandenen, radial angeordneten Rippen in einer oder mehreren der Flussbarrieren eingesetzt werden. Bei geeigneter Dimensionierung der Stege in der erfindungsgemäßen Art und Weise kann auf solche zusätzlichen, radial angeordneten Rippen jedoch ganz verzichtet werden, was die magnetischen Eigenschaften des Rotors weiter verbessert.

Die Erfindung betrifft außerdem einen Synchron-Reluktanzmotor mit einem Rotor nach einem der vorstehend erläuterten Ansprüche 1 bis 11. Der Synchron-Reluktanzmotor kann insbesondere zum Betrieb mit dreiphasigem Wechselstrom bestimmt sein.

In einer Ausgestaltung hat der Synchron-Reluktanzmotor einen Stator, der drei Statorschlitze je Pol und Phase aufweist. In Verbindung mit dem vierpoligen Rotor der Erfindung und bei drei Phasen hat der Stator somit 36 Statorschlitze.

Die Erfindung wird nachfolgend anhand eines in einer Figur dargestellten Ausführungsbeispiels näher erläutert. Es zeigen:
- Fig. 1: einen Ausschnitt aus einem Querschnitt eines Synchron-Reluktanzmotors nach dem Stand der Technik,
- Fig. 2: einen Ausschnitt aus einem Querschnitt eines erfindungsgemäßen Rotors für einen Synchron-Reluktanzmotor.

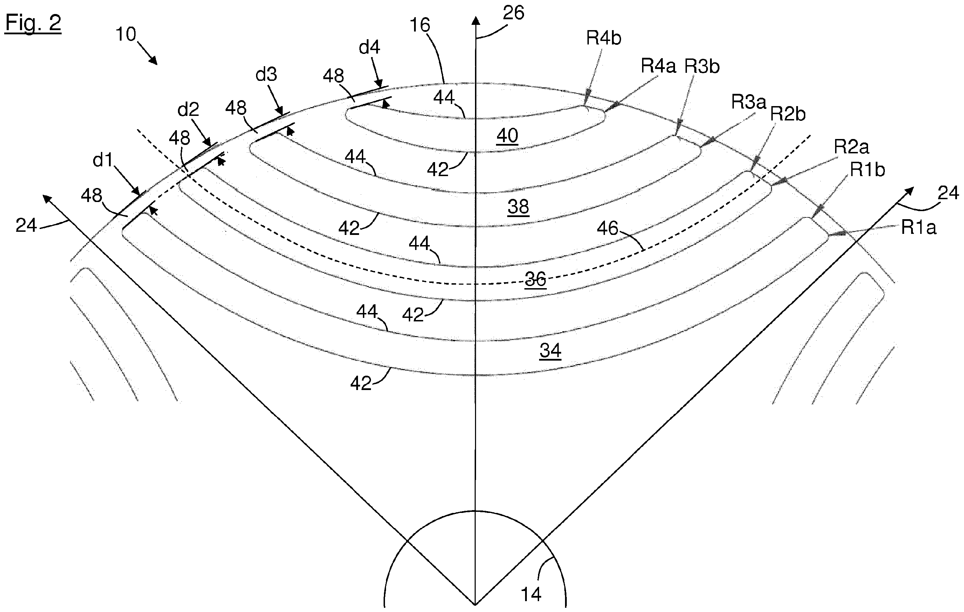

Figur 1 wurde bereits einleitend zum Stand der Technik erläutert. Die dabei eingeführten Bezugszeichen werden auch zur Erläuterung des in der Figur 2 gezeigten Ausführungsbeispiels verwendet.

Figur 2 zeigt einen Ausschnitt eines im Querschnitt dargestellten Rotors 10 gemäß der Erfindung. Ein mit diesem Rotor 10 versehener Synchron-Reluktanzmotor weist zusätzlich einen Stator auf, der in der Figur 2 nicht dargestellt ist. Dieser Stator und die Anordnung des Rotors 10 darin können der Anordnung aus Figur 1 gleichen.

Der Rotor 10 weist vier Kreissektoren auf, von denen in der Figur 2 nur etwas mehr als einer zu sehen ist. In der Mitte des dargestellten Kreissektors weist der Rotor 10 eine q-Achse 26 auf. Ebenfalls angedeutet sind die beiden den Kreissektor begrenzenden d-Achsen 24. In der Mitte weist der Rotor 10 eine nur teilweise sichtbare, mittige Aussparung 14 zur Aufnahme einer Rotorwelle auf.

Der in der Figur 2 dargestellte Kreissektor erstreckt sich über einen Winkelbereich von 90° und weist vier Flussbarrieren 34 bis 40 auf, nämlich der Reihe nach von innen nach außen eine innerste Flussbarriere 34, die sich in dem geringsten Abstand von der mittigen Aussparung 14 befindet, eine zweitinnerste Flussbarriere 36, eine zweitäußerste Flussbarriere 38 und eine äußerste Flussbarriere 40, die sich in dem größten Abstand von der mittigen Aussparung 14 befindet.

Jede der Flussbarrieren 34 bis 40 ist symmetrisch zur q-Achse 26 angeordnet und erstreckt sich bis nahe an den Außenumfang 16 des Rotors heran. Jede der Flussbarrieren 34 bis 40 wird umschrieben von einer inneren Grenzlinie 42 und einer äußeren Grenzlinie 44.

Jede der Flussbarrieren 34 bis 40 hat außerdem eine Mittellinie 46, die in der Figur 2 für die zweitinnerste Flussbarriere 36 eingezeichnet ist. Dort ist erkennbar, dass die innere Grenzlinie 42 und die äußere Grenzlinie 44 im Wesentlichen in gleichmäßigem Abstand von der Mittellinie 46 verlaufen. Dies ist bei der innersten Flussbarriere 34 und der zweitäußersten Flussbarriere 38 ebenfalls gegeben, sodass diese drei Flussbarrieren 34 bis 38 eine im Wesentlichen gleichmäßige Breite aufweisen.

Die innere Grenzlinie 42 und äußere Grenzlinie 44 der äußersten Flussbarriere 40 verlaufen davon abweichend nicht in exakt gleichmäßigem Abstand von der Mittellinie 46 der äußersten Flussbarriere 40, sondern laufen nach außen hin etwas auf diese Mittellinie 46 zu, sodass sich die Breite der äußersten Flussbarriere 40 zu den Enden der Flussbarriere 40 hin etwas verringert.

Jede der Flussbarrieren 34 bis 40 weist zwei Enden auf, die jeweils durch einen Steg 48 von dem Außenumfang 16 getrennt sind. Eine Seite eines jeden Stegs 48 wird von dem Außenumfang 16 gebildet, die andere Seite von dem Ende der betreffenden Flussbarriere 34 bis 40. Die Linien, entlang der die Stege 48 an die betreffenden Enden der Flussbarrieren 34 bis 40 angrenzen, können konzentrisch zu dem Außenumfang 16 verlaufen, wie am Beispiel der zweitinnersten Flussbarriere 36 angedeutet. Die Stege 48 weisen jeweils eine minimale Breite d1 bis d4 auf.

Im dargestellten Ausführungsbeispiel beträgt die minimale Breite d2 der zweitinnersten Flussbarriere 36 etwa 1 mm. Die minimalen Breiten der Stege 48 der innersten Flussbarriere 34 und der zweitäußersten Flussbarriere 38, d1 und d3, betragen jeweils etwa 1,2 mm. Die minimale Breite d4 der Stege 48 der äußersten Flussbarriere 40 beträgt etwa 1 mm. Der Durchmesser des gezeigten Rotors liegt im Bereich von 70 mm bis 90 mm.

Wie in der Figur 2 zu erkennen, gehen die inneren Grenzlinien 42 an ihren beiden Enden jeweils entlang einer ersten Krümmung in einen angrenzenden Steg 48 über, wobei diese erste Krümmung jeweils einen minimalen Radius aufweist. Die äußeren Grenzlinien 44 gehen an ihren beiden Enden jeweils entlang einer zweiten Krümmung in einen angrenzenden Steg 48 über. Die minimalen Radien der ersten bzw. zweiten Krümmungen sind in der Figur 1 mit R1a, R1b für die innerste Flussbarriere 34 bis R4a, R4b für die äußerste Flussbarriere 40 bezeichnet. Im dargestellten Beispiel betragen die minimalen Radien R2a und R2b jeweils 0,7 mm. Der minimale Radius R1a beträgt 3,5 mm, der minimale Radius R1b beträgt 0,75 mm. Der minimale Radius R3a beträgt 1 mm, der minimale Radius R3b beträgt 4,5 mm. Der minimale Radius R4a beträgt 1 mm, der minimale Radius R4b beträgt 4 mm.

Ebenfalls gut in der Figur 2 zu erkennen ist, dass keine der Flussbarrieren 34 bis 40 eine radiale Rippe aufweist. Derartige Rippen sind bei der Erfindung zur Erreichung einer ausreichenden mechanischen Stabilität nicht erforderlich, sodass im Interesse möglichst optimaler magnetischer Eigenschaften auf sie verzichtet werden kann.

### Liste der verwendeten Bezugszeichen:

- 10: Rotor
- 12: Stator
- 14: mittige Aussparung
- 16: Außenumfang
- 18: Luftspalt
- 20: Statorzähne
- 22: Statorschlitze
- 24: d-Achse
- 26: q-Achse
- 28: Flussbarriere
- 30: radiale Rippe
- 32: tangentialer Steg
- 34: innerste Flussbarriere
- 36: zweitinnerste Flussbarriere
- 38: zweitäußerste Flussbarriere
- 40: äußerste Flussbarriere
- 42: innere Grenzlinie
- 44: äußere Grenzlinie
- 46: Mittellinie
- 48: Steg

## Patentansprüche

1. Rotor (10) für einen Synchron-Reluktanzmotor mit einem Querschnitt, der einen Außenumfang (16), vier Pole und vier Kreissektoren umfasst, wobei
• jeder Kreissektor eine q-Achse (26) und vier Flussbarrieren (36-40) aufweist,
• jede Flussbarriere (36-40) symmetrisch zu der q-Achse (26) angeordnet ist,
• jede Flussbarriere (36-40) zwei Enden aufweist, die jeweils von einem tangential angeordneten Steg (48) von dem Außenumfang (16) getrennt sind,
• jede Flussbarriere (36-40) eine innere Grenzlinie (42) aufweist, die an ihren beiden Enden jeweils mit einer ersten Krümmung in einen angrenzenden Steg (48) übergeht,
• jede Flussbarriere (36-40) eine äußere Grenzlinie (44) aufweist, die an ihren beiden Enden jeweils mit einer zweiten Krümmung in einen angrenzenden Steg (48) übergeht,
• die erste Krümmung der zweitinnersten Flussbarriere (36) einen minimalen Radius R2a und die zweite Krümmung der zweitinnersten Flussbarriere (36) einen minimalen Radius R2b aufweist, und
• die Stege der zweitinnersten Flussbarriere (36) eine minimale Breite d2 aufweisen, **dadurch gekennzeichnet, dass**
• die minimale Breite d1 der Stege der innersten Flussbarriere (34) und die minimale Breite d3 der Stege der zweitäußersten Flussbarriere (38) größer sind als die minimale Breite d2.

2. Rotor (10) nach Anspruch 1, **dadurch gekennzeichnet, dass** die minimale Breite d1 der innersten Flussbarriere (34) das 1,1-fache bis 1,3-fache der minimalen Breite d2 beträgt.

3. Rotor (10) nach Anspruch 1 oder 2, **dadurch gekennzeichnet, dass** die minimale Breite d3 der zweitäußersten Flussbarriere (38) das 1,1-fache bis 1,3-fache der minimalen Breite d2 beträgt.

4. Rotor (10) nach einem der Ansprüche 1 bis 3, **dadurch gekennzeichnet, dass** die minimale Breite d4 der äußersten Flussbarriere (40) das 0,85-fache bis 1,15-fache der minimalen Breite d2 beträgt.

5. Rotor (10) nach einem der Ansprüche 1 bis 4, **dadurch gekennzeichnet, dass** der minimale Radius R1a der ersten Krümmung der innersten Flussbarriere (34) das 3,0-fache bis 4,0-fache des minimalen Radius R2a beträgt.

6. Rotor (10) nach einem der Ansprüche 1 bis 5, **dadurch gekennzeichnet, dass** der minimale Radius R1b der zweiten Krümmung der innersten Flussbarriere (34) das 0,5-fache bis 1,0-fache des minimalen Radius R2b beträgt.

7. Rotor (10) nach einem der Ansprüche 1 bis 6, **dadurch gekennzeichnet, dass** der minimale Radius R3a der ersten Krümmung der zweitäußersten Flussbarriere (38) das 0,8-fache bis 1,2-fache des minimalen Radius R2a beträgt.

8. Rotor (10) nach einem der Ansprüche 1 bis 7, **dadurch gekennzeichnet, dass** der minimale Radius R3b der zweiten Krümmung der zweitäußersten Flussbarriere (38) das 4,0-fache bis 5,0-fache des minimalen Radius R2b beträgt.

9. Rotor (10) nach einem der Ansprüche 1 bis 8, **dadurch gekennzeichnet, dass** der minimale Radius R4a der ersten Krümmung der äußersten Flussbarriere (40) das 0,8-fache bis 1,2-fache des minimalen Radius R2a beträgt.

10. Rotor (10) nach einem der Ansprüche 1 bis 9, **dadurch gekennzeichnet, dass** der minimale Radius R4b der zweiten Krümmung der äußersten Flussbarriere (40) das 3,0-fache bis 5,0-fache des minimalen Radius R2a beträgt.

11. Rotor (10) nach einem der Ansprüche 1 bis 10, **dadurch gekennzeichnet, dass** in keiner der Flussbarrieren (34-40) eine radial angeordnete Rippe vorhanden ist.

12. Synchron-Reluktanzmotor mit einem Rotor (10) nach einem der Ansprüche 1 bis 11.

13. Synchron-Reluktanzmotor nach Anspruch 12 mit einem Stator (12), der drei Statorschlitze (22) je Pol und Phase aufweist.

## Claims

1. A rotor (10) for a synchronous reluctance motor comprising a cross section which comprises an outer circumference (16), four poles and four circular sectors, wherein
• each circular sector has a q-axis (26) and four flux barriers (36-40),
• each flux barrier (36-40) is arranged symmetrically to the q-axis (26),
• each flux barrier (36-40) has two ends which are each separated from the outer circumference (16) by a tangentially arranged web (48),
• each flux barrier (36-40) has an inner boundary line (42) which merges at its two ends in each case with a first curvature with an adjacent web (48),
• each flux barrier (36-40) has an outer boundary line (44) which merges at its two ends in each case with a second curvature with an adjacent web (48),
• the first curvature of the second innermost flux barrier (36) has a minimum radius R2a and the second curvature of the second innermost flux barrier (36) has a minimum radius R2b, and
• the webs of the second innermost flux barrier (36) have a minimum width d2, **characterized in that**
• the minimum width d1 of the webs of the innermost flux barrier (34) and the minimum width d3 of the webs of the second outermost flux barrier (38) are greater than the minimum width d2.

2. The rotor (10) according to Claim 1, **characterized in that** the minimum width d1 of the innermost flux barrier (34) is 1.1 times to 1.3 times the minimum width d2.

3. The rotor (10) according to Claim 1 or 2, **characterized in that** the minimum width d3 of the second outermost flux barrier (38) is 1.1 times to 1.3 times the minimum width d2.

4. The rotor (10) according to any one of Claims 1 to 3, **characterized in that** the minimum width d4 of the outermost flux barrier (40) is 0.85 to 1.15 times the minimum width d2.

5. The rotor (10) according to any one of Claims 1 to 4, **characterized in that** the minimum radius R1a of the first curvature of the innermost flux barrier (34) is 3.0 times to 4.0 times the minimum radius R2a.

6. The rotor (10) according to any one of Claims 1 to 5, **characterized in that** the minimum radius R1b of the second curvature of the innermost flux barrier (34) is 0.5 times to 1.0 times the minimum radius R2b.

7. The rotor (10) according to any one of Claims 1 to 6, **characterized in that** the minimum radius R3a of the first curvature of the second outermost flux barrier (38) is 0.8 times to 1.2 times the minimum radius R2.

8. The rotor (10) according to any one of Claims 1 to 7, **characterized in that** the minimum radius R3b of the second curvature of the second outermost flux barrier (38) is 4.0 times to 5.0 times the minimum radius R2b.

9. The rotor (10) according to any one of Claims 1 to 8, **characterized in that** the minimum radius R4a of the first curvature of the outermost flux barrier (40) is 0.8 times to 1.2 times the minimum radius R2a.

10. The rotor (10) according to any one of Claims 1 to 9, **characterized in that** the minimum radius R4b of the second curvature of the outermost flux barrier (40) is 3.0 times to 5.0 times the minimum radius R2a.

11. The rotor (10) according to any one of Claims 1 to 10, **characterized in that** in none of the flux barriers (34-40) is a radially arranged rib present.

12. A synchronous reluctance motor having a rotor (10) according to any one of Claims 1 to 11.

13. The synchronous reluctance motor according to Claim 12, having a stator (12) which has three stator slots (22) per pole and phase.

## Revendications

1. Rotor (10) pour un moteur à reluctance synchrone comportant une section transversale, lequel comporte un pourtour extérieur (16), quatre pôles et quatre secteurs circulaires, dans lequel
• chaque secteur circulaire présente un axe q (26) et quatre barrières de flux (36-40),
• chaque barrière de flux (36-40) est disposée symétriquement à l'axe q (26),
• chaque barrière de flux (36-40) présente deux extrémités respectivement séparées du pourtour extérieur (16) par une âme (48) disposée tangentiellement,
• chaque barrière de flux (36-40) présente une ligne de délimitation intérieure (42) se raccordant à ses deux extrémités respectivement avec une première incurvation à une âme (48) adjacente,
• chaque barrière de flux (36-40) présente une ligne de délimitation extérieure (44) se raccordant à ses deux extrémités respectivement avec une deuxième incurvation à une âme (48) adjacente,
• la première incurvation de la barrière de flux située en deuxième en partant de l'intérieur (36) présente un rayon minimal R2a et la deuxième incurvation de la barrière de flux située en deuxième en partant de l'intérieur (36) présente un rayon minimal R2b, et
• les âmes de la barrière de flux située en deuxième en partant de l'intérieur (36) présentent une largeur minimale d2, **caractérisé en ce que**
• la largeur minimale d1 des âmes de la barrière de flux située le plus à l'intérieur (34) et la largeur minimale d3 des âmes de la barrière de flux située en deuxième en partant de l'extérieur (38) sont supérieures à la largeur minimale d2.

2. Rotor (10) selon la revendication 1, **caractérisé en ce que** la largeur minimale d1 de la barrière de flux située le plus à l'intérieur (34) est comprise entre 1,1 et 1,3 fois la largeur minimale d2.

3. Rotor (10) selon la revendication 1 ou 2, **caractérisé en ce que** la largeur minimale d3 de la barrière de flux située en deuxième en partant de l'extérieur (38) est comprise entre 1,1 et 1,3 fois la largeur minimale d2.

4. Rotor (10) selon l'une des revendications 1 à 3, **caractérisé en ce que** la largeur minimale d4 de la barrière de flux située le plus à l'extérieur (40) est comprise entre 0,85 et 1,15 fois la largeur minimale d2.

5. Rotor (10) selon l'une des revendications 1 à 4, **caractérisé en ce que** le rayon minimal R1a de la première incurvation de la barrière de flux située le plus à l'intérieur (34) est compris entre 3,0 et 4,0 fois le rayon minimal R2a.

6. Rotor (10) selon l'une des revendications 1 à 5, **caractérisé en ce que** le rayon minimal R1b de la deuxième incurvation de la barrière de flux située le plus à l'intérieur (34) est compris entre 0,5 et 1,0 fois le rayon minimal R2b.

7. Rotor (10) selon l'une des revendications 1 à 6, **caractérisé en ce que** le rayon minimal R3a de la première incurvation de la barrière de flux située en deuxième en partant de l'extérieur (38) est compris entre 0,8 et 1,2 fois le rayon minimal R2a.

8. Rotor (10) selon l'une des revendications 1 à 7, **caractérisé en ce que** le rayon minimal R3b de la deuxième incurvation de la barrière de flux située en deuxième en partant de l'extérieur (38) est compris entre 4,0 et 5,0 fois le rayon minimal R2b.

9. Rotor (10) selon l'une des revendications 1 à 8, **caractérisé en ce que** le rayon minimal R4a de la première incurvation de la barrière de flux située le plus à l'extérieur (40) est compris entre 0,8 et 1,2 fois le rayon minimal R2a.

10. Rotor (10) selon l'une des revendications 1 à 9, **caractérisé en ce que** le rayon minimal R4b de la deuxième incurvation de la barrière de flux située le plus à l'extérieur (40) est compris entre 3,0 et 5,0 le rayon minimal R2a.

11. Rotor (10) selon l'une des revendications 1 à 10, **caractérisé en ce qu'**aucune des barrières de flux (36-40) ne présente une nervure disposée radialement.

12. Moteur à reluctance synchrone avec un rotor (10) selon l'une des revendications 1 à 11.

13. Moteur à reluctance synchrone selon la revendication 12, avec un stator (12) présentant trois fentes de stator (22) par pôle et phase.
